**Europäisches Patentamt**

**European Patent Office**

**Office européen des brevets**

(19)

(11) Veröffentlichungsnummer: **0 053 369**
**A1**

(12) # EUROPÄISCHE PATENTANMELDUNG

(21) Anmeldenummer: **81109940.7**

(22) Anmeldetag: **27.11.81**

(51) Int. Cl.³: **F 02 M 31/18**

(30) Priorität: **02.12.80 CH 8907/80**

(43) Veröffentlichungstag der Anmeldung: **09.06.82**
**Patentblatt 82/23**

(84) Benannte Vertragsstaaten: **AT BE DE FR GB IT LU NL SE**

(71) Anmelder: **Feraton Anstalt, Bürotel, FL-9494 Schaan (LI)**

(72) Erfinder: **Jovy, Herbert, Dr., Max Rüttger Strasse 22, Irschenhausen (DE)**

(74) Vertreter: **Blum, Rudolf Emil Ernst et al, c/o E. BLUM & CO. Vorderberg 11, CH-8044 Zürich (CH)**

(54) **Verfahren zum thermischen Behandeln eines flüssigen Kraftstoffes und Anlage zur Durchführung des Verfahrens.**

(57) Flüssiger Kraftstoff wird von einem Speicherbehälter (1) durch Wärmetauscher (6, 8, 10) geführt, mittels welchen der flüssige Kraftstoff in einen gasförmigen Aggregatstand übergeführt wird. Der gasförmige Kraftstoff wird darauf in den Verwendungskammerteil (16) der Brennkraftmaschine eingeführt. Die Beheizung eines Wärmetauschers (6) geschieht durch Entnahme von Verlustwärme aus dem Kühlfluid (18) der Brennkraftmaschine. In einem weiteren Wärmetauscher (8) wird eine Wärmemenge aus den Abgasen (19) entnommen. Ein weiterer Wärmetauscher (10) ist von einem Akkumulator (21) oder einem Stromerzeuger (20), die der Brennkraftmaschine zugeordnet sind, beheizt. Den Wärmetauschern (6, 8, 10) ist jeweils ein Wärmespeicher (7, 9, 11) zugeordnet.

1

## Verfahren zum thermischen Behandeln eines flüssigen Kraftstoffes und Anlage zur Durchführung des Verfahrens

Die Erfindung betrifft ein Verfahren zum thermischen Behandeln eines flüssigen Kraftstoffes für eine Brennkraftmaschine, welcher flüssige Kraftstoff von einem Speicher gegen den Verbrennungskammerteil der Brennkraftmaschine gefördert und darin verbrannt wird. Weiter betrifft sie eine Anlage zur Durchführung des Verfahrens, mit einem Speicherbehälter für flüssigen Kraftstoff, einer davon ausgehenden Kraftstoffspeiseleitung, einer Kraftstoffspeiseleitung, einer Kraftstoffpumpe und einem fluidgekühlten Verbrennungskammerteil.

Mit flüssigen Kraftstoffen betriebene Brennkraftmaschinen sind Ottomotoren und Dieselmotoren, die als Zweitakt- oder Viertaktmotoren ausgebildet sind, und die Kraftmaschinen mit eine lineare Bewegung durchführenden Kolben und auch Drehkolbenmaschinen sein können. Bei den Ottomotoren wird der flüssige Kraftstoff gegen einen sogenannten Vergaser gefördert, in welchem der Kraftstoff mit Verbrennungsluft zusammengebracht wird, um das sogenannte Gemisch zu bilden, welches ein Kraftstoffnebel ist, also der Kraftstoff in fein verteilten Tröpfchen vorliegt, welches Gemisch der Verbrennungskammer (n) der Brennkraftmaschine zugeführt

23.11.1981
AMS/aw

41 437

und darin verbrannt wird. Bei Dieselmotoren fällt die Gemischbildung weg. Anstatt dessen wird der flüssige Kraftstoff unmittelbar in die jeweilige Verbrennungskammer jedoch auch in Form fein verteilter Tröpfchen eingespritzt. Dadurch, dass der Kraftstoff in Form feinverteilter Flüssigkeitströpfchen vorliegt, ist der Grad der Vermischung des Kraftstoffes mit der Verbrennungsluft begrenzt und somit die erzeugbare Leistung beschränkt. Weiter entsteht beim Kreisprozess der Verbrennung Abwärme, welche (von der Fahrgastraumheizung abgesehen) unbenützt in die Umwelt abgegeben wird und zu einem gewissen Masse eine Umweltbelastung darstellt.

Hier will die Erfindung Abhilfe schaffen. Die Erfindung, wie sie in den Ansprüchen gekennzeichnet ist, löst die Aufgabe, ein Verfahren zum thermischen Behandeln eines flüssigen Kraftstoffes und eine Wärmemenge zur Durchführung des Verfahrens zu schaffen, bei dem der Kraftstoff vom flüssigen in den gasförmigen Zustand überführt wird, wozu die benötigte Wärmemenge mindestens zum Teil aus der Verlustwärme der Brennkraftmaschine entnommen wird.

Die durch die Erfindung erreichten Vorteile sind im wesentlichen darin zu sehen, dass durch den gasförmigen Brennstoff ein homogenes Gemisch und damit eine bessere Verbrennung des Brennstoffluft-Gemisches erhalten werden kann. Dadurch ergibt sich einerseits eine beträchtliche Brennstoffeinsparung und andererseits eine höhere Motorleistung. Auch wird die Verlustwärme des Motors der Brennkraftmaschine grösstenteils ausgenützt und damit die Umwelt weniger belastet.

Dadurch kann es möglich sein, eine Kraftstoffeinsparung von bis zu 50 % zu erreichen. Es können bessere Verbrennungswerte und dadurch eine bessere Motorenleistung erzielt werden. Weiter kann es möglich sein, die in den Abgasrückständen vorhandenen Schadstoffe zu vermindern.

Im folgenden wird die Erfindung anhand von lediglich einem Ausführungsweg darstellender Zeichnung näher erläutert.

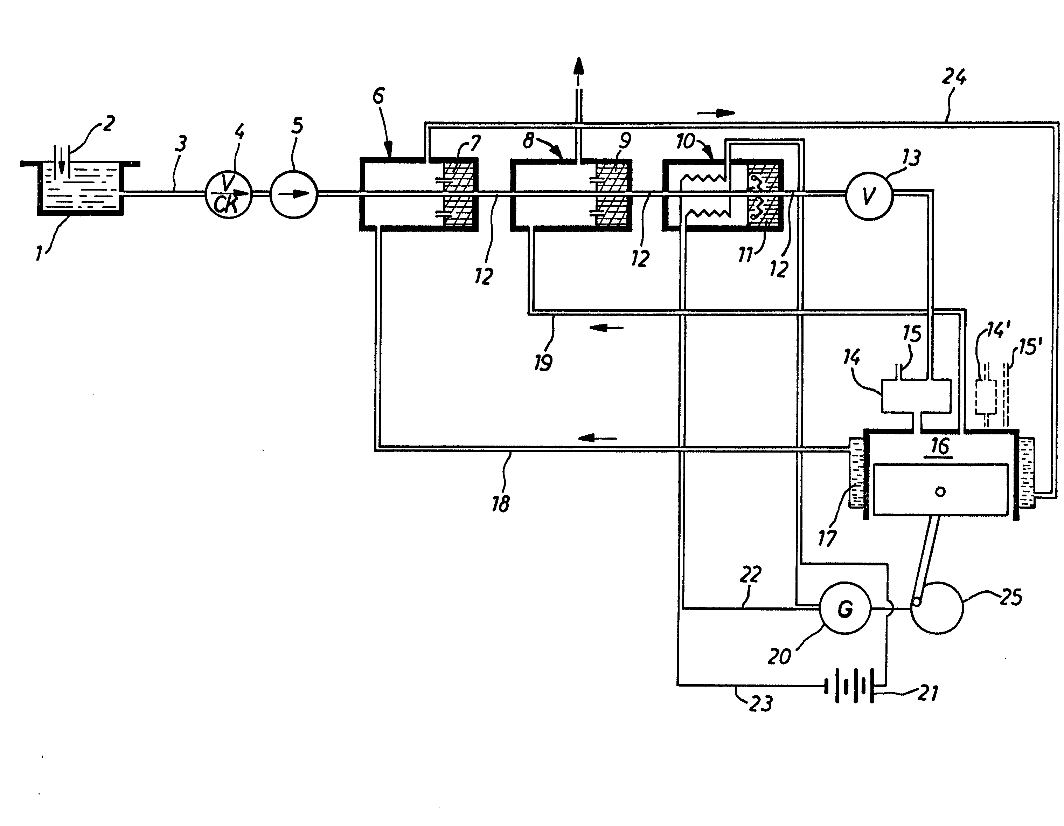

Die einzige Fig. zeigt schematisch eine Anlage zur Durchführung des erfindungsgemässen Verfahrens.

In einem Speicherbehälter 1 ist der Kraftstoff gespeichert, welcher Speicherbehälter üblicherweise Kraftstofftank genannt wird. Durch den Einfüllstutzen 2 wird der flüssige Kraftstoff in den Speicherbehälter 1 eingeführt. Vom Speicherbehälter 1 erstreckt sich eine Kraftstoffspeiseleitung 3 gegen ein Rückschlagventil 4. Diesem Rückschlagventil 4 folgt in Strömungsrichtung des Kraftstoffes gesehen die bekannte Kraftstoffpumpe 5. Von der Kraftstoffpumpe 5 aus erstreckt sich die Kraftstoffspeiseleitung 3 weiter in einen ersten Wärmetauscher 6. Diesem ersten Wärmetauscher 6 ist ein erster Wärmespeicher 7 zugeordnet. Vom ersten Wärmetauscher 6 aus erstreckt sich die Kraftstoffleitung zu einem zweiten Wärmetauscher 8. Dabei kann im sich zwischen dem ersten und zweiten Wärmetauscher befindlichen Leitungsabschnitt 12 der Kraftstoffspeiseleitung 3 ein Rückschlagventil oder andere Steuerorgane angeordnet sein, die jedoch aus Gründen der Klarheit nicht dargestellt sind.

Dem zweiten Wärmetauscher 8 ist ein zweiter Wärmespeicher 9 zugeordnet. Von diesem aus verläuft die Kraftstoffspeiseleitung 3 zu einem dritten Wärmetauscher 10, wobei der sich dazwischen befindliche Leitungsabschnitt 12 wie vorgehend erwähnt durch zum Betrieb notwendigen Einrichtungen hindurch erstrecken kann. Dem dritten Wärmetauscher 10 ist ein dritter Wärmespeicher 11 zugeordnet. Von diesem aus verläuft die Kraftstoffspeiseleitung 3, wie wieder mit dem Leitungsabschnitt 12 bezeichnet ist, zu einem Mengenstromsteuerventil 13. Von diesem aus erstreckt sich die Leitung für den nunmehr gasförmigen Kraftstoff zu einer Gemischbildungskammer 14, die unter dem Namen "Vergaser" bekannt ist und der bekannten Anordnung eines Ottomotors entspricht, wobei bei 15 die notwendige Verbrennungsluft zugeführt wird.

Ist der Motor ein Dieselmotor, folgt dem Mengenstromsteuerventil 13 eine der "Einspritzvorrichtung" eines Dieselmotors entsprechende Einbringvorrichtung 14',in welcher der gasförmige Kraftstoff gegebenenfalls auf höheren Druck gebracht und entsprechend den Arbeitstakten des Dieselmotors in den Verbrennungskammerteil 16 eingebracht wird. Dabei führt die Verbrennungsluftleitung 15' offensichtlich direkt zum Verbrennungskammerteil 16. Diese Variante ist in der Zeichnung strichliniert dargestellt.

Im Verbrennungskammerteil 16 wird dann die bekannte Verbrennung durchgeführt. Die Abgasleitung ist mit der Bezugsziffer 19 bezeichnet. Offensichtlich sind je nach Motorbauart Ventile und/oder Spülschlitze vorhanden.

Aus der Fig. ist ersichtlich, dass sich die Abgasleitung 19 zum zweiten Wärmetauscher 8 erstreckt. Um den Verbrennungskammerteil 16 ist ein mit der Bezugsziffer 17 bezeichneter Kühlmantel angeordnet. Das sich darin befindliche Kühlfluid kann je nach Kühlart der Brennkraftmaschine ein flüssiger oder gasförmiger Stoff (Kühlluft) sein. Vom Kühlmantel 17 erstreckt sich die Kühlfluidleitung 18 zum ersten Wärmetauscher 6. Vom ersten Wärmetauscher 6 erstreckt sich eine Rückströmleitung 24 für das Kühlfluid und verläuft zum Kühlmantel 17 des Verbrennungskammerteils 16 zurück. Diese Rückströmleitung 24 ist offensichtlich nur bei einem geschlossenen Kühlkreislauf mit einem flüssigen Kühlmittel notwendig. Bei einem offenen Kühlkreislauf, bei dem mit Luft gekühlt wird, fällt diese Rückströmleitung 24 offensichtlich weg.

Weiter ist schematisch gezeigt, dass ein von der Kurbelwelle 25 getriebener elektrischer Stromerzeuger 20 vorhanden ist, von welchem eine elektrische Leitung 22 zum dritten Wärmetauscher 10 führt.

Die Bezugsziffer 21 bezeichnet den bekannten Akkumulator, die Batterie eines Kraftfahrzeuges, von dieser führt eine elektrische Leitung 23 ebenfalls zum dritten Wärmetauscher 10.

Gemäss der gezeigten Anlage wird insbesondere jegliche Verlustwärme der Brennkraftmaschine zum Erwärmen des flüssigen Kraftstoffes verwendet, um diesen in einen gasförmigen Zustand überzuführen. Nicht gezeigt ist auch eine weitere Ausführung, bei der dem Schmieröl der Brennkraftmaschine ebenfalls eine zum Wärmen des Kraftstoffes verwendete Wärmemenge entzogen wird.

Es muss deutlich bemerkt werden, dass die gezeigte Anlage nur ein Ausführungsbeispiel der Erfindung ist. Notwendig ist lediglich nur ein Wärmetauscher, eine Wärmetauscheinrichtung, um das Verfahren durchführen zu können. Beispielsweise kann zu diesem Zweck nur die im Abgas 19 der Brennkraftmaschine vorhandene Wärme zum Ueberführen des flüssigen Kraftstoffes in seinen gasförmigen Aggregatzustand verwendet werden. Bei einer solchen Ausführung ist die Kraftstoffspeiseleitung 3 derart angeordnet, dass sie die Abgasleitung 19 umschlingt und damit eine Wärmetauscheinrichtung gebildet ist. Alternativ kann die Kraftstoffspeiseleitung 3 durch die Abgasleitung 19 hindurchgeführt sein.

Der Zweck der im dritten Wärmetauscher 10 gezeigten elektrischen Beheizung ist ein sicherer Betrieb bei einem Kaltstart durchzuführen. Dabei kann ein anfängliches Erwärmen des Kraftstoffes durch vom Akkumulator 21 stammenden elektrischen Energie durchgeführt werden und sobald die Brennkraftmaschine in Betrieb steht, der Akkumulator 21 weggeschaltet und dafür ein Stromerzeuger 20 dazugeschaltet werden. Dieser kann beispielsweise der der Lichtmaschine eines Kraftfahrzeuges zugeordnete Stromerzeuger sein. Nach kurzer Betriebszeit können diese elektrischen Apparate weggeschaltet werden, so dass das Wärmetauschen nur noch mit dem Abgas 19 und, falls diese Ausführung vorhanden ist, mit dem Kühlfluid 18 durchgeführt werden. Es soll hier beachtet werden, dass in diesem Fall der Kraftstoff zuerst Wärme aus dem Kühlfluid 18 und darauf aus dem Abgas 19 entnimmt, so dass eine mehrstufige Vorwärmung vorhanden ist. Allen drei Wärmetauschern 6;8;10 ist jeweils ein Wärmespeicher 7;9;11 zugeordnet. Diese Wärmespeicher tragen dazu bei, beim Anfahren der Brennkraftmaschine den flüssigen Kraftstoff schnell verdampfen zu lassen, so dass ein sicheres Anfahren der Brennkraftmaschine sichergestellt ist.

Somit ist jede von der Brennkraftmaschine erzeugte Verlustwärme wirkungsvoll dazu ausgenützt, den flüssigen Brennstoff in einen gasförmigen Aggregatstand überzuführen, womit nicht nur eine beträchtliche Kraftstoffeinsparung,bzw. höhere Motorleistung erhalten werden kann, sondern die Umweltbelastung dadurch verkleinert werden kann, dass weniger Verlustwärme an die Umgebung abgegeben wird.

Patentansprüche

1. Verfahren zum thermischen Behandeln flüssigen Kraftstoffes für eine Brennkraftmschine, welcher flüssige Kraftstoff von einem Speicher gegen den Verbrennungskammerteil der Brennkraftmaschine gefördert und darin verbrannt wird, dadurch gekennzeichnet, dass dem Kraftstoff Wärme in einer solchen Menge zugeführt wird, dass er in einen gasförmigen Zustand überführt wird, dass der sich im gasförmigen Zustand befindliche Kraftstoff mit Verbrennungsluft vermischt und im Verbrennungskammerteil verbrannt wird, und dass die zugeführte Wärmemenge mindestens zum Teil aus der Verlustwärme der Brennkraftmaschine entnommen wird.

2. Verfahren nach Anspruch 1, dadurch gekennzeichnet, dass die zugeführte Wärmemenge den Abgasen der Brennkraftmaschine entnommen wird.

3. Verfahren nach Anspruch 1, dadurch gekennzeichnet, dass die zugeführte Wärmemenge dem Kühlfluid der Brennkraftmaschine entnommen wird.

4. Verfahren nach Anspruch 1, dadurch gekennzeichnet, dass die Wärmemenge durch ein elektrisches Beheizen des Kraftstoffes zugeführt wird.

5. Verfahren nach einem der Ansprüche 1 bis 4, dadurch gekennzeichnet, dass die zugeführte Wärmemenge mindestens einem durch Verlustwärme der Brennkraftmaschine oder elektrisch beheizten Wärmespeicher entnommen wird.

6. Anlage zur Durchführung des Verfahrens nach Anspruch 1, mit einem Speicherbehälter (1) für flüssigen Kraftstoff, einer davon ausgehenden Kraftstoffspeiseleitung (3), einer Kraftstoffpumpe (5) und einen fluid-

0053369

gekühlten Verbrennungskammerteil (16), dadurch gekennzeichnet, dass die Kraftstoffspeiseleitung (3) mindestens einer Wärmetauschereinrichtung (6;8;10) zugeführt ist, die mit einer Verlustwärme der Brennkraftmaschine enthaltendes Fluid führenden Leitung (18;19) verbunden ist.

7. Anlage nach Anspruch 6, dadurch gekennzeichnet, dass die Wärmetauschereinrichtung (6;8;10) eine elektrische Heizvorrichtung (10) aufweist, welcher elektrische Energie stammend von einem von der Brennkraftmaschine getriebenen Stromerzeuger (20) oder einen der Brennkraftmaschine zugeordneten Energiespeicher (21) zugeführt ist.

8. Anlage nach Anspruch 6, dadurch gekennzeichnet, dass die Wärmetauschereinrichtung aus einem um die Auspuffleitung (19) der Brennkraftmaschine gewunden verlaufenden Abschnitt der Kraftstoffspeiseleitung (3) gebildet ist.

9. Anlage nach Anspruch 6, dadurch gekennzeichnet, dass die Wärmetauschereinrichtung aus einem durch die Auspuffleitung (19) der Brennkraftmaschine verlaufenden Abschnitt der Kraftstoffspeiseleitung (3) gebildet ist.

10. Anlage nach Anspruch 6 oder 7, dadurch gekennzeichnet, dass mindestens einem der Wärmetauscher (6; 8;10) ein Wärmespeicher (7;9;11) zugeordnet ist.

| Europäisches Patentamt | **EUROPÄISCHER RECHERCHENBERICHT** | **0053369** Nummer der Anmeldung EP 81 10 9940 |

<table>
<tr><td colspan="3"><b>EINSCHLÄGIGE DOKUMENTE</b></td><td>KLASSIFIKATION DER ANMELDUNG (Int. Cl.³)</td></tr>
<tr><td>Kategorie</td><td colspan="2">Kennzeichnung des Dokuments mit Angabe, soweit erforderlich, der maßgeblichen Teile / betrifft Anspruch</td><td></td></tr>
</table>

| Kategorie | Kennzeichnung des Dokuments mit Angabe, soweit erforderlich, der maßgeblichen Teile | betrifft Anspruch |
|---|---|---|
| X | GB - A - 167 707 (SMITH) * Seite 1, Zeilen 36-54; Seite 1, Zeile 70 - Seite 2, Zeile 30 * | 1,2,4, 6,7,9 |
| X | US - A - 4 213 433 (DAY) * Spalte 1, Zeilen 5-11; Spalte 3, Zeile 49 - Spalte 4, Zeile 8; Spalte 5, Zeilen 60-64 * | 1-4,6, 7 |
| X | DE - A - 2 657 806 (MEINERS) * Seite 2, Zeilen 5-24 * | 1,2,4, 6,7 |
| X | US - A - 4 206 733 (GREGORY) * Spalte 1, Zeile 56 - Spalte 2, Zeile 28 * | 1,2,6, 8 |
| X | DE - A - 2 538 063 (FINZE) * Seite 5, Ansprüche 3,4 * | 1,3 |

**KLASSIFIKATION DER ANMELDUNG (Int. Cl.³)**

F 02 M 31/18

**RECHERCHIERTE SACHGEBIETE (Int. Cl.³)**

F 02 M

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-03-1982 | TATUS |

EPA form 1503.1 06.78